# EUROPEAN PATENT APPLICATION

(11) **EP 1 623 621 A1**
(43) Date of publication of application: **08.02.2006**
(21) Application number: 04018730.4
(22) Date of filing: 06.08.2004
(51) Int. Cl.: A01K 83/00

(54) **A method of manufacturing a fishhook, and a fishhook**

(71) Applicant: Gamakatsu Co., Ltd., Nishiwaki-shi, Hyogo (JP)
(72) Inventor: Fujii, Shigekatsu, c/oGamakatsu Co., Ltd., Nishiwaki-shi Hyogo (JP)
(74) Representative: Graalfs, Edo

(57) **Abstract**

An object of the present invention is to provide a readily manufacturing of a fishhook (1) having the barb (12) whose angles and shapes can be freely changed correspondingly to purposes of use. A method of manufacturing a fishhook according to the present invention is characterized by: applying machining process for providing a sharpened part (3) at a tip of wire (2) to constitute a fishhook: and applying pressing process for making into a plate-like shape a part (5) in continuation to the sharpened tip part; and further applying simultaneously or sequentially in free order machining process for forming a stepped part (6) at one lateral side of the plate-like part and machining process for cutting out a swollen portion (5a) produced at the other lateral side of the plate-like part, whereby forming a point part of a fishhook.

## Description

### BACKGROUND OF THE INVENTION

The present invention relates to a method of manufacturing a fishhook, and an improvement of a point of a fishhook.

A fishhook generally used is manufactured customarily with such steps as: pressing one end of a piece of wire cut in a predetermined length to form an "eye" part: sharpening the other end of the wire piece to form a "point" part; cutting with a cutting tool slantwise into a part of the wire piece extending in continuation to the point part and scraping to cause that cut-into part to arise, thereby forming a barb; and then bending the wire piece and finally heat-treating for hardening.

In forming the barb by the way of cutting with the cutting tool slantwise into the wire piece and scraping to cause the cut-into part to arise, the barb part is caused by the scraping operation to arise usually at an angle of about 35 degrees with respect to the wire piece and the tip of the barb is customarily in the form of sharply tapering off to a point.

The barb is provided for preventing hooked fish from being released carelessly. In case of forming the barb by cutting with the cutting tool slantwise into the wire piece and scraping to cause the cut-into part to arise, the angles of the barb with respect to the hook and the shapes of the barb cannot be freely set. For example, it is impossible to set the angles of arising to be an obtuse angle or to set the arising feature of the barb to be round. Hence, there are hitherto seen such defects that in case that a fish hook having the barb caused to arise at the angles of about 35 degrees gets stuck in an angler's hand, the fishhook is not able to be removed from the angler's hand without cutting up the skin and flesh of the angler's hand. Moreover, the past fishhook when sticks in the angler's cloths cannot be taken from it without ripping to pieces the concerned part of the cloths.

The wire piece material when it is subjected to process of scraping as in the prior art merely provides a fishhook structured with the wire piece having a particular part lower in strength, which is the largest defect in the past fishhook.

### SUMMARY OF THE INVENTION

The present invention relates to and provides a method of manufacturing a fishhook wherein shapes and angles of a barb can be freely designed so that a fishhook having an ideal "point" part can be readily manufactured correspondingly to specific purposes of use.

### DETAILED DESCRIPTION OF THE INVENTION

The present invention is characterized by: applying simultaneously or sequentially in free order machining process for providing a sharpened part at a tip of wire to constitute a fishhook; pressing process for making into a plate-like shape a part in continuation to the sharpened tip part; and machining process for forming a stepped part at one lateral side of the plate-like part and, occasionally or as or when required, machining process for cutting out a swollen portion produced at the other lateral side of the plate-like part, whereby forming a "point" part of a fishhook.

The present invention has such advantages that shapes and angles of the barb can be varied freely correspondingly to specific purposes of use, namely, the barb in a desired shape can be freely made.

In detail, in case that the barb is formed by the way, like the fishhook hitherto provided, as cutting with the cutting tool slantwise into the wire piece and scraping to cause the cut-into part to arise, the angles and shapes of the barb are fixed in a specific extent. The present invention, which is characterized by applying to the plate-like part the cutting out process for forming the barb (the stepped part), has the advantage that such fishhook can be readily manufactured that the shapes and angles of the barb are freely altered correspondingly to specific purposes of use which feature was impossible hitherto. In detail, the advantage of the present invention is to readily provide the barb in the shape or form that fish when hooked by the fishhook is not easily released. and in case that the point part of the fishhook gets stuck in angler's hand or cloths, it can be removed from the hand or cloths reasonably.

In case that the barb is formed by the way of cutting with the cutting tool slantwise into the wire piece and scraping to cause the cut-into part to arise, the cut-into part is extremely lowered in strength. The method according to the present invention when adopted completes and provides a fishhook having the point part of high strength without a partial lower strength. Additionally, the fishhook according to the method of the present invention provides the advantage of manufacturing the fishhook superior in efficiency of piercing. Furthermore, in case that the plate-like part 5 is subjected to edging process, such advantage is obtained that the efficiency of piercing can be further improved.

Moreover, the point part of the fishhook I is so structured as claim 3 or claim 4 that the region extending from the utmost end of the sharpened tip part to a part in continuation to and away slightly from the utmost end is in a tapered plate-like shape, thereby providing such advantage of increasing sharpness of the point part and improving the efficiency of piercing fish skin.

### BRIEF DESCRIPTION OF THE DRAWINGS

Fig. 1 is a perspective view showing the whole of a fishhook according to the present invention.
Fig. 2 is a front view showing processes of manufacturing the point part of the fishhook.
Fig. 3 is a perspective view showing the whole of a fishhook according to the present invention.
Fig. 4 is a front view showing processes of manufacturing the point part of the fishhook.
Fig. 5 is a partially cross-sectional perspective view showing a shape of the point part.
Fig. 6 is a perspective view showing the whole of a fishhook according to the present invention.
Fig. 7 is a front view showing processes of manufacturing the point part of the fishhook.
Fig. 8 is a partially cross-sectional perspective view showing a shape of the point part.
Fig. 9 is a perspective view showing the whole of a fishhook according to the present invention.
Fig. 10 is a front view showing processes of manufacturing the point part of the fishhook.
Fig. 11 is a perspective view showing the whole of a fishhook according to the present invention.
Fig. 12 is a partially cross-sectional perspective view showing a shape of the point part.
Fig. 13 is a partially cross-sectional perspective view showing a shape of the point part.
Fig. 14 is a partially cross-sectional perspective view showing a shape of the point part.
Fig. 15 is a perspective view showing a modified example of the point part.
Fig. 16 is a side view showing a shape of the point part.
Fig. 17 is an explanatory view showing machining process of the point part.
Fig. 18 is a side view showing a shape of the point part.
Fig. 19 is an explanatory view showing machining process of the point part.

### PREFERRED EMBODIMENTS OF THE INVENTION

Next, the present invention will be detailed with referring to the attached drawings. The fishhook 1 is manufactured by:
applying simultaneously or sequentially in free order machining process for providing a sharpened part 3 at a tip of a wire piece 2, which wire piece 2 is provided by cutting a material into a predetermined length and constitutes the fishhook 1; pressing process for making a plate-like part 5 at a region extending from a part in continuation to the utmost end portion 1 of the sharpened part 3 to a lower side 2a, the plate-like part 5 being thinner at its upper end side than the lower side 2a, while keeping the utmost end portion 4 of the sharpened part 3 as it is; and machining process for forming a stepped part 6 at one lateral side of the plate-like part 5; and occasionally or as or when required, further machining process for cutting out the whole of a swollen portion 5a produced at the other lateral side of the plate-like part 5, or machining process for cutting out a part of the swollen portion 5a to form a stepped part 6a at the other lateral side of the plate-like part 5.

In detail, the wire piece 2 to constitute the fishhook 1 is provided by cutting the material into a predetermined length as shown in Fig. 2(A). Sharpening the wire piece 2 is carried out by grinding the wire piece 2 to make the same tapered toward its tip and acutely sharpen the tip as shown in Fig. 2(B).

The forming process for the plate-like part 5 is carried out by applying pressing process for making a plate-like part at a region extending from a part in continuation to the utmost end portion 4 to a lower side 2a of the wire piece 2 not subjected to sharpening operation, the plate-like part gradually becoming thinner from the lower side 2a toward the upper end side, while keeping the acute utmost end portion 4 (formed by sharpening operation) as it is, as shown in Fig. 2(C). As a result, there is formed the plate-like part 5 having a shape of a front view illustrated in the left one of Fig. 2(C) and a tapered shape of a side view in the right one of Fig. 2(C).

The cutting out process for forming a stepped part 6 at one 1a teral side of the plate-like part 5 is performed by applying to the hatched area 7 of the plate-like part 5 in Fig. 2(D) punching process using press mold or scraping (grinding) process by means of a grinding machine. By this, a stepped part 6 in the shape shown in Fig. 2(E) is formed at one lateral side of the plate-like part 5 and serves as the barb 12 of the fishhook 1. The angles and shapes of the stepped part 6 can be determined by specific shapes of the press mold and can be freely changed correspondingly to designs of the press mold.

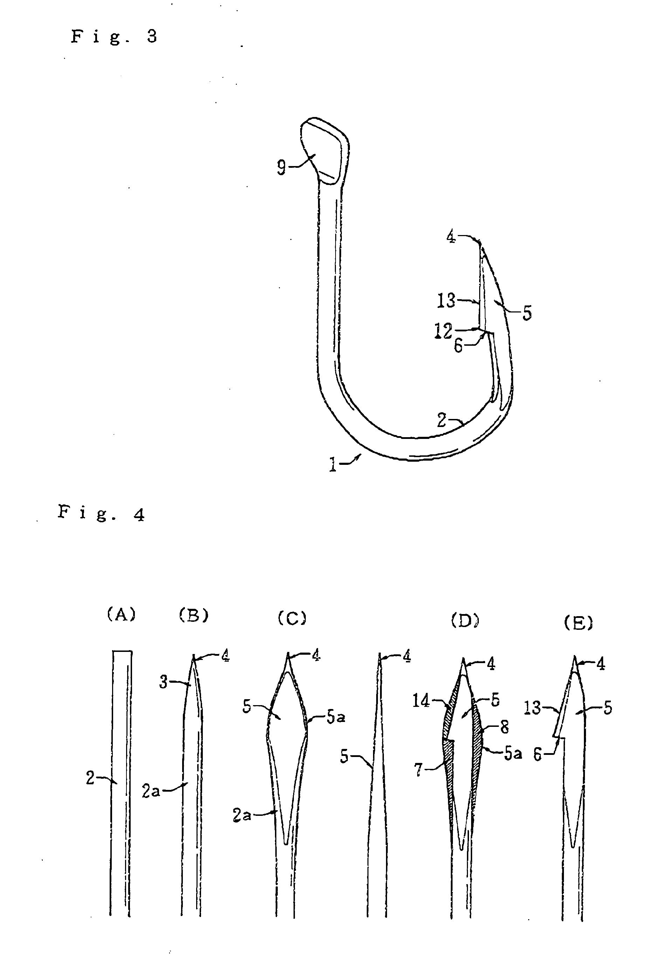

Figs. 3 and 4 show an example of the case of applying the cutting out process also to a swollen portion produced at the other lateral side of the plate-like part 5. The cutting out process for forming a stepped part 6 at one lateral side of the plate-like part 5 and the machining process for cutting out the swollen portion 5a produced at the other lateral side of the plate-like part 5 are performed by applying to the hatched areas 7 and 8 of the plate-like part 5 in Fig. 4(D) punching process using press mold or scraping (grinding) process by means of a grinding machine. By this, a stepped part 6 in the shape shown in Fig. 4 (E) is formed at one lateral side of the plate-like part 5 and serves as the barb 12 of the fishhook 1, while the swollen part 5a is cut out.

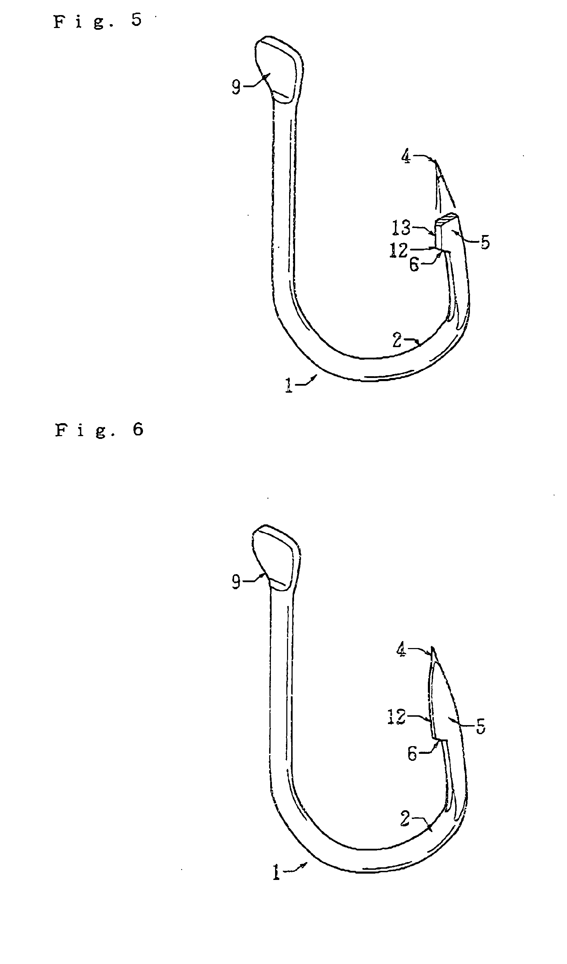

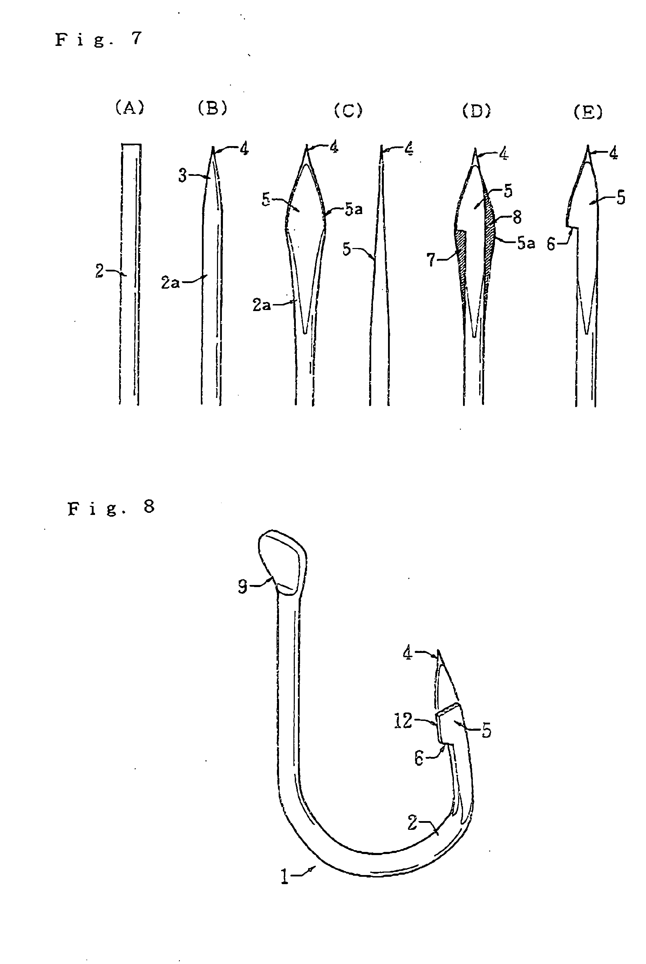

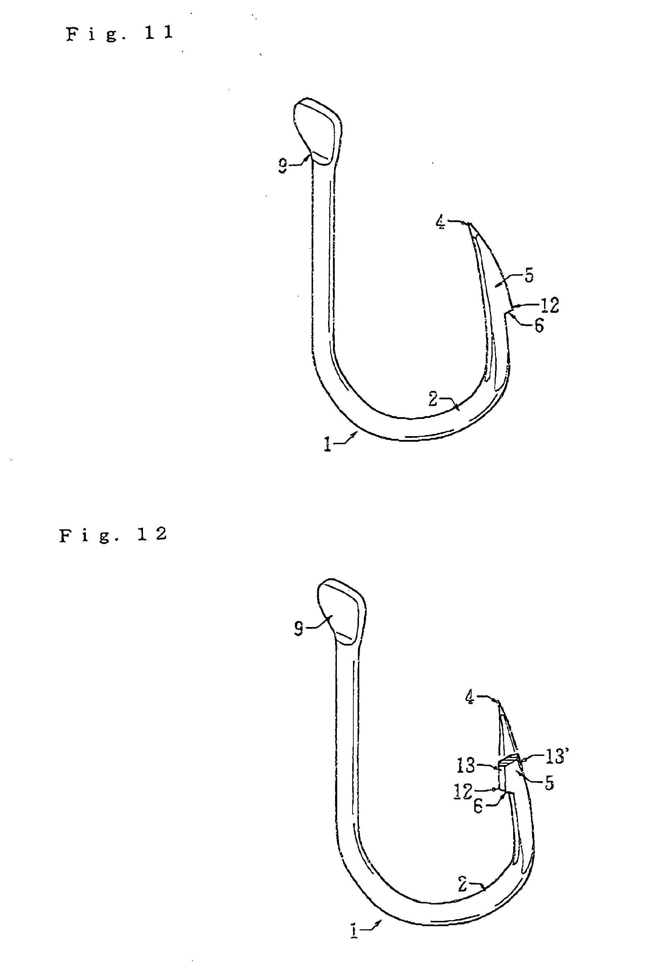

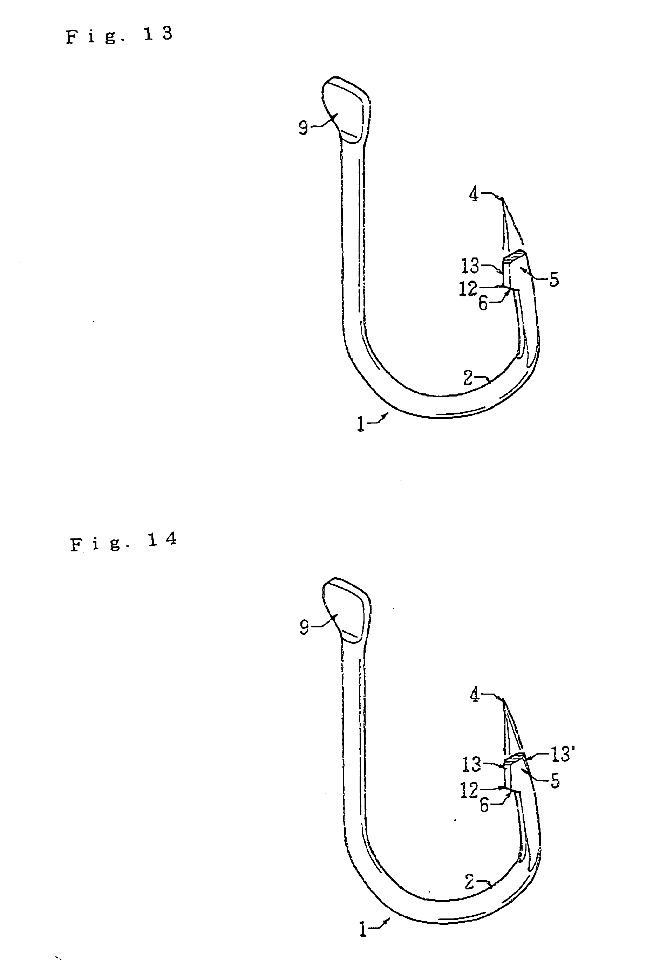

In case that the stepped part 6 is formed by the punching process using the press mold, the cross section of the point part of the fishhook is rectangular as seen in Figs. 6 to 8. As shown in Fig. 2(E), Fig. 4 (E) and Fig. 13, edging process can be applied to the left side edge of the plate-like part 5 formed by the pressing process so as to make the ridge 13 into a blade-like shape. Also, as shown in Figs. 12 and 14, both lateral edges of the plate-like part 5 may be subjected to edging process to make the ridges 13, 13' into a blade-like shape.

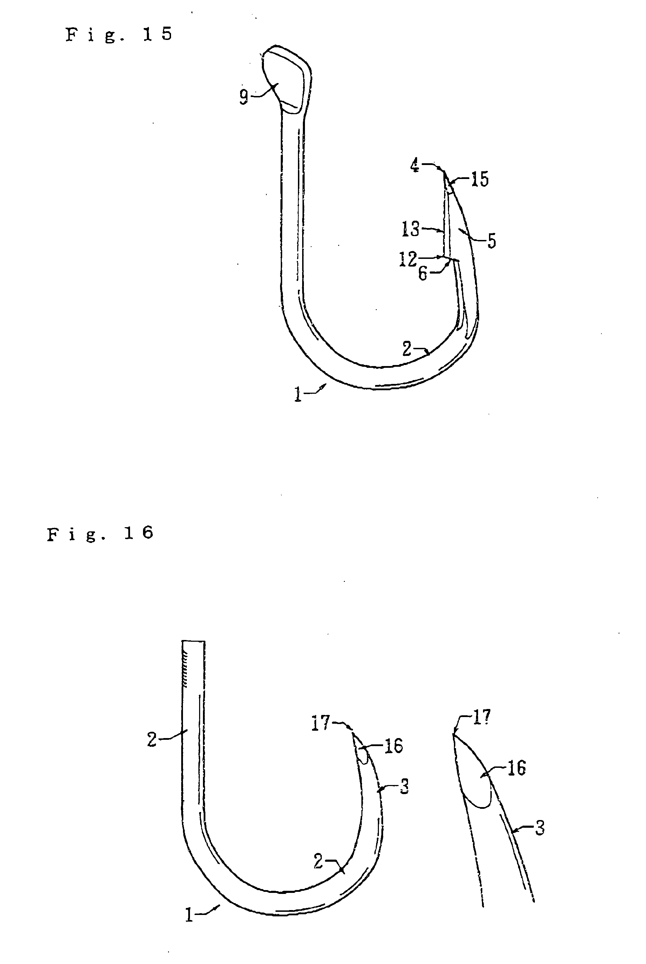

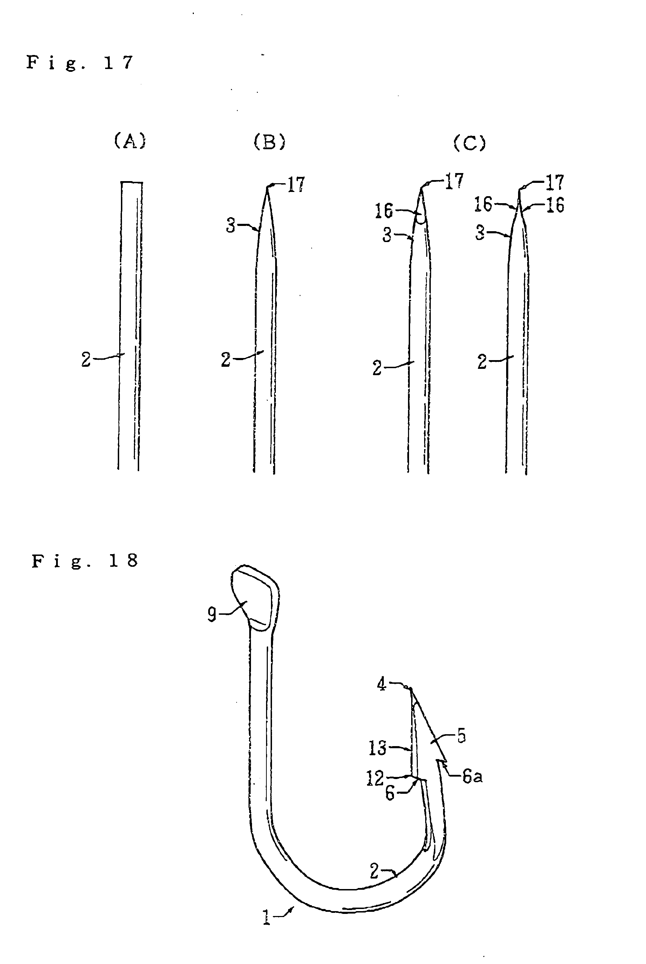

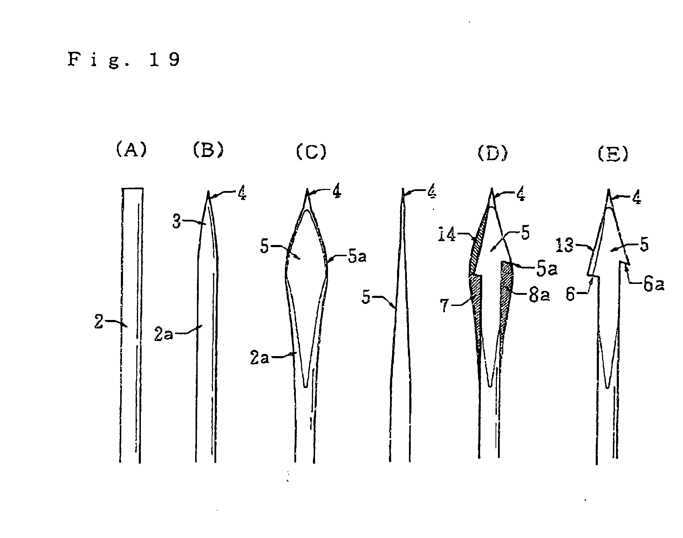

Fig. 15 shows the case that a part 15 extending from an upper section to the utmost end 4 of the plate-like part 5 formed by pressing is subjected to pressing process to be in a tapered plate-like shape. Figs. 16 and 17 show the case that the wire piece 2 is subjected to machining process to be provided at its end with a sharpened part 3 and also subjected to roller press process to make into a tapered plate-like shape the part 16 extending from the tip 17 of the sharpened part 3 to a part in continuation to and slightly away from the tip 17, thereby forming the point part of fishhook. By this, the end of the point part of fishhook 1 is in the tapered plate-like shape, whereby enabling the point part to be completed acutely. Furthermore, Figs. 18 and 19 show the machining that a part of the swollen portion 5a is cut out to form a stepped part 6a at the other lateral side of the plate-like part 5. By this. the feature forming the stepped portions at both lateral sides of the plate-like part 5 is achieved.

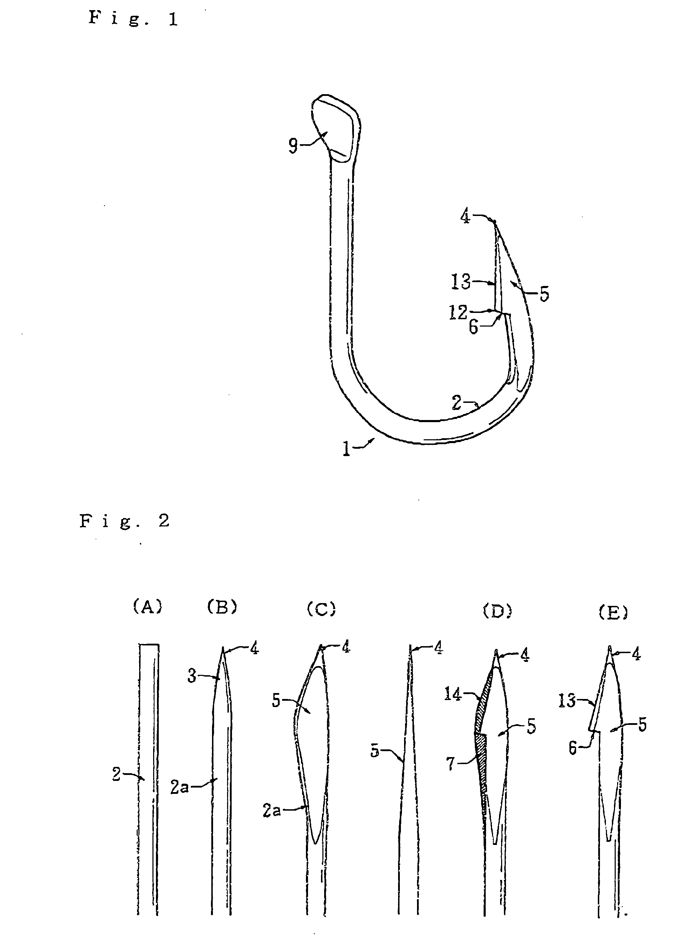

The point part of the fishhook 1 is provided by the method as above. After forming the point part, the wire piece is subjected to bending process to cause the stepped part 6 to face inwards, finally followed by heat-treating to thereby complete manufacturing of the fishhook 1 in shape shown in Fig. 1. Regarding the sorts of fishhooks manufactured according to the present invention, there may be manufactured a treble hook comprising fishhooks manufactured according to the present invention and bound like an anchor (other than the type of fishhook shown in Fig. 1).

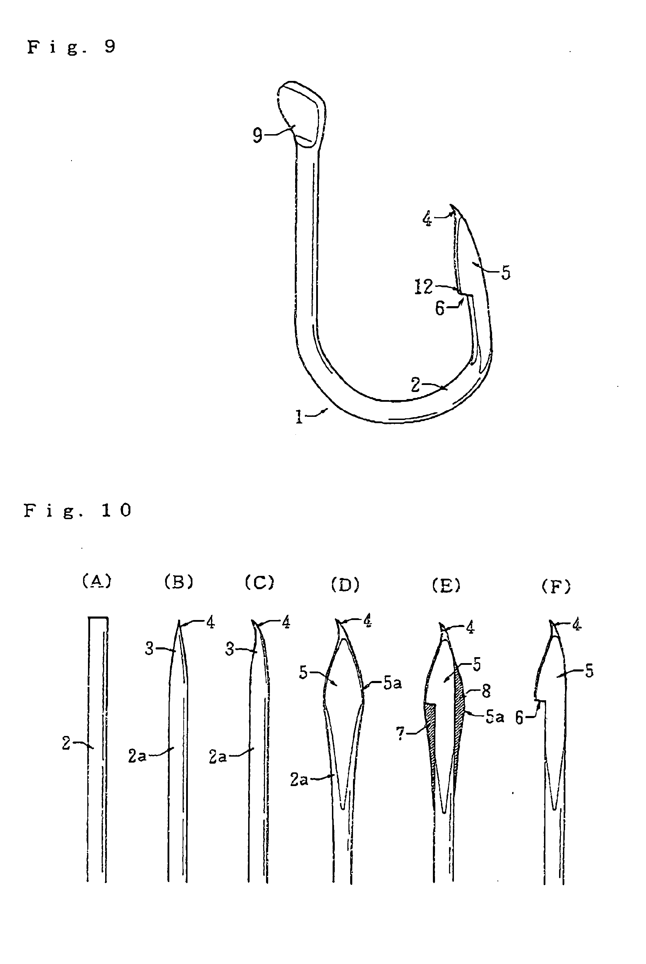

The above examples are the cases manufacturing a fishhook having the point part facing upwards. As shown in Fig. 10(A) to 10(E), the bending process (C) for bending slightly the tip of the wire piece 2 already sharpened is first applied, and the pressing process for forming the plate-like part 5 is then applied and the plate-like part 5 is subjected to the machining process for providing the stepped part 6 at the plate-like part 5, thereby enabling manufacture of a fishhook 1 in the shape having the point part 4 slanted toward the "gape" of fishhook as shown in Fig. 9.

The above example is the case making a fishhook having a stepped part 6 facing the gape (the inside) of fishhook. In case that the wire piece is subjected to the bending causing the stepped part 6 to be positioned at the outside, thereby enabling manufacture of a fishhook 1 of "outbarb" type as shown in Fig. 11.

## Claims

1. A method of manufacturing a fishhook by applying simultaneously or sequentially in free order machining process for providing a sharpened part 3 at a tip of wire 2; pressing process for making a plate-like part 5 at a region extending from a part in continuation to an utmost end portion 4 of the sharpened part 3 to a lower side 2a, the plate-like part 5 being thinner at its upper end side than the lower side 2a, while keeping the utmost end portion 4 of the sharpened part 3 as it is: and machining process for forming a stepped part 6 at one lateral side of the plate-like part 5, thereby forming the point of the fishhook 1.

2. A method of manufacturing a fishhook by applying simultaneously or sequentially in free order machining process for providing a sharpened part 3 at a tip of wire 2; pressing process for making a plate-like part 5 at a region extending from a part in continuation to an utmost end portion 4 of the sharpened part 3 to a lower side 2a, the plate-like part 5 being thinner at its upper end side than the lower side 2a, while keeping the utmost end portion 4 of the sharpened part 3 as it is; and machining process for forming a stepped part 6 at one lateral side of the plate-like part 5 and also cutting out the whole of a swollen portion 5a produced at the other lateral side, or machining process for cutting out a part of the swollen portion 5a to form a stepped part 6a at the outside of the plate-like part 5, thereby forming the point of the fishhook 1.

3. A fishhook wherein a part 15 extending from the tip of the fishhook 1 to an upper part of a plate-like part 5 formed by pressing process is subjected to pressing process to be made into a tapered plate-like shape.

4. A fishhook wherein wire 2 is subjected to machining process for forming a sharpened part 3, and a part 16 extending from a tip 17 of the sharpened part 3 to a part in continuation to and away slightly from the tip 17 is subjected to roller press process to be made into a tapered plate-like shape.
